# EUROPEAN PATENT SPECIFICATION

(11) **EP 1 875 138 B1**
(45) Date of publication and mention of the grant of the patent: **26.03.2014**
(21) Application number: 06726835.9
(22) Date of filing: 21.04.2006
(51) Int. Cl.: F24D 17/00, F24J 2/00, F24H 9/12, F24H 9/20, F24H 1/50

(54) **HOT WATER INSTALLATIONS**
HEISSWASSERINSTALLATIONEN
INSTALLATIONS D'EAU CHAUDE

(30) Priority: 21.04.2005 GB 0508080
(43) Date of publication of application: 09.01.2008
(73) Proprietor: Clean Heat Provision Limited, London SW20 8TN (GB)
(72) Inventor: ORCHARD, William, Ronald, Heywood, London SW20 8TN (GB)
(74) Representative: Wood, Timothy Colin
(86) International application number: PCT/GB2006/001445
(87) International publication number: WO 2006/111755

(56) References cited:
- FR-A- 2 330 975
- PATENT ABSTRACTS OF JAPAN vol. 2003, no. 12, 5 December 2003 (2003-12-05) & JP 2004 257590 A (OSAKA GAS CO LTD), 16 September 2004 (2004-09-16)
- PATENT ABSTRACTS OF JAPAN vol. 2000, no. 07, 29 September 2000 (2000-09-29) & JP 2000 121157 A (OSAKA GAS CO LTD; HARMAN CO LTD), 28 April 2000 (2000-04-28)
- PATENT ABSTRACTS OF JAPAN vol. 2003, no. 07, 3 July 2003 (2003-07-03) & JP 2003 074969 A (TOKYO GAS CO LTD; OSAKA GAS CO LTD; TOHO GAS CO LTD; SEIBU GAS CO LTD;), 12 March 2003 (2003-03-12)
- PATENT ABSTRACTS OF JAPAN vol. 011, no. 241 (M-614), 7 August 1987 (1987-08-07) & JP 62 052359 A (TAKAGI SANGYO KK), 7 March 1987 (1987-03-07)

## Description

This invention relates to hot water installations for the supply of hot water to baths, showers, wash hand basins and the like for example in hotels, hospitals offices, private dwellings and industry. The present installations are designed to make use of low-grade heat which is complemented by a higher grade heat to bring the temperature of the water up to a desired temperature.

Japanese patent specification P2000-121157A discloses an installation where hot water is stored in a storage vessel, and the water is heated in a complex external heating circuit where a plurality of external heat exchangers are arranged in series. Cold water is fed into the bottom of the vessel and withdrawn from a separate outlet close to base of the vessel and circulated through the heat exchangers before being returned to the head of the vessel. Hot water is withdrawn from top of the vessel in line with traditional practice. Japanese patent specification P2003-74969A similarly shows a storage vessel for hot water that is heated in an external heating circuit. Again, the storage vessel has four tappings, and in the arrangement shown the hot water in the storage vessel does not remain stratified.

Japanese patent specification P2004-257590A also discloses a storage vessel which receives a cold feed and the hot water outlet is delivered from the vessel. The water is heated in an external heating circuit. As P2003-74969A water in the vessel is not stratified. Each of the circuits of the prior art requires a storage tank having four tappings in line with conventional practice. In all cases the cold water is fed into the vessel having to mixing with water in the vessel before being extracted and heated.

An installation according to the invention is defined in the attached claims. An installation in accordance with the invention is characterised in that the storage vessel has only two connections, a first connection in the base of the vessel feed the external heating circuit connects to cold feed through to the storage vessel, and a second connection for feeding hot water from the external heating circuit into the storage vessel to charge the vessel with heated water, or for delivering hot water from the vessel to the domestic hot water outlet for the system. The effect of the tee junction is that either all water can be supplied from the storage vessel or from the heating circuit or a mixed flow condition from both sources. The two single connections to the vessel one top the other bottom allow the flow through each of the two connections of the storage vessel to be reversible and hot water can thus be supplied either from the storage vessel and/or directly from the external heating circuit.

The two-way flow permits the capacity of the variable flow and variable heat supply capacity of the external heating circuit to be used to the full to match remote heat generation equipment minimum output requirements in delivering primary water to the systems heat exchangers. This is complemented by hot water from the storage tank, for water to be withdrawn from the storage tank when demand is either small or very high. Depleted hot water from the tank is replaced by the heating circuit as flow in the outlet reverses. Hot water stratification in the tank is thus maintained, boosting thermal efficiency of the installation and the vessels effective thermal capacity

A non-return valve, is advantageously placed in the external heating circuit in order to avoid reflux or reverse circulation in the circuit. However, the circuit advantageously uses positive displacement pumping to perform this and other functions in the heating circuit.

In the Japanese patent specifications referred to above none can provide a full store of heated water whilst at the same time heating incoming cold water and supply it directly to taps or supply hot water directly to taps when the store its self is full of cold water or deliver hot water from both the storage vessel and the external heating circuit to meet maximum demand, or offer the flexibility that such a connection arrangement provides.

By providing an electric heater as (preferably) the last heater before the heated water enters the storage vessel allows lower grade heat to be used to preheat the water in the external circuit. This heater is a particularly desirable feature of the invention as it allows the water in the vessel to be raised to a temperature suitable for sterilisation at night where 70°-80°C is the disinfection range. If water is at 70°-80°C is in the storage vessel a mixing circuit can permit this water to be reduced in temperature to outlet temperatures suitable for showering and bathing in a range of 38°C-46°C (as recommended for safe water temperatures).

This feature, which is not shown in the prior art, also allows domestic hot water to be stored in the vessel at lower temperatures suitable for capturing solar thermal energy which can later be raised in temperature.

The invention has a particular benefit where the incoming water is hard which results in scale deposition on heat exchangers. Scale deposits are relatively low at temperatures in the range of 40°-55°C.

Preferred embodiments of the invention are particularly useful in domestic hot water installations.

Preferred embodiments of the invention address the problem of how to prevent the development of Legionella bacteria. The present invention relates to a method of heating water and controlling the heating of water, and the method of controlling water circulation within a hot water installation, storage draw-off and recirculation of water that has been drawn off and is subsequently returned for reheating.

The invention further addresses the problem of how to control and time the storage of energy in the form of domestic hot water and, through the use of a stratified store, how to improve the operation of Combined Heat and Power plants. Energy may be supplied as heat, for example by solar power, although any energy source where the quality or quantity or cost of production changes with time may be used.

A hot water installation according to the invention comprises a storage vessel for holding a thermally stratified store of hot water, an inlet at the bottom of the storage vessel to receive a supply of water, an outlet at the top of the vessel to deliver hot water as required on demand, and a water heating circuit externally of the storage vessel, the water heating circuit extending from a first connection at the base through at least one heat exchanger to be heated to or above the final temperature required for the hot water.

In preferred embodiments, a water heating circuit includes a pump to circulate water around a heating circuit from the store inlet to the store outlet. The circuit further includes a temperature sensor in the store inlet and a control unit to control the pump such that when the sensed temperature reaches a predetermined value the pump is stopped, and when the sensed temperature falls to the cold water supply temperature the pump is started. In preferred embodiments, the heating circuit may include at least one heat exchanger for providing heat from a heat source to the water to raise the water to a temperature between the supply temperature and the predetermined value.

In a preferred embodiment, a by-pass is provided around the pump. The function of the bypass is to keep fixed speed pumps on their curve and to provide minimum flow through the pump when the volume of water pumped through the heat exchanger is to be varied. This allows the output from the heat exchanger to be varied

A sensing element or thermostat may be provided in the bypass such that liquid whose temperature is to be controlled is allowed to flow over the length of the thermostat which improves the rate of response of the thermostat.

The thermostat may be positioned in relation to the heat exchanger and the pump so that, even under pump failure, the thermostat will sense the temperature of the water leaving the heat exchanger. This may be achieved by using a plate heat exchanger having tappings on both sides of it, the heat exchanger being installed horizontally rather than vertically. By providing a bypass from the top or upper tapping to the lower tapping, a convection circuit for the hot fluid may be provided to cause liquid to flow over the sensor with or without pump assistance.

Piping fittings, made of e.g. brass and/or copper, attached to the heat exchanger also permit conduction of heat to the sensor.

This arrangement provides functions that are not normally provided for by plate heat exchangers. In known systems, sensors are mounted outside the heat exchangers due to the practical problems of inserting temperature sensors into heat exchangers having only four connections. In a preferred embodiment, the use of a heat exchanger having eight connections allows for gases to be readily vented from the heat exchanger.

The pump may be of the positive displacement type, for example a piston and cylinder pump with a smoothing accumulator, or of the rotary type.

Where the primary heat source for a heat exchanger of the heating circuit requires the return primary temperature to be below a predetermined value (for example, for a condensing boiler of a combined heat and power unit), the primary circuit of the heat exchanger of the present invention advantageously may include at least one valve, preferably of the fully modulating type, for controlling the primary flow, and if needed, for stopping the flow through the primary of the heat exchanger. In this way, by controlling the primary flow, the primary return temperature can be varied.

In order to avoid "dead space" within the store which could harbour bacteria such as the Legionella bacteria, an inlet diffusor may be provided at the bottom of the store. The diffuser feeds the incoming cold water into the store and diffuses it, thus reducing its velocity, reducing mixing of the contents of the store and promoting stratification. Where the inlet is the conventional cold water inlet part of a pre-existing hot water cylinder, the diffusor may be of flexible construction, expandable after insertion through the inlet part and weighted so as to lie on the bottom of the cylinder. The tube can be a sleeve, incoming water pressure inflating the sleeve as it enters the vessel.

In addition, in order to ensure that the store becomes filled with hot water, an outlet diffuser is fitted to draw out cold water from the bottom of the cylinder through the pump and external heat exchanger.

Where the diffuser does not rely on incoming water pressure to inflate a sleeve to provide a path for the water, the inlet diffuser and outlet diffuser can be formed as a single unit.

The circuit can perform in different modes to make hot water quickly available at a plurality of locations.

In a first mode, the return water from the circuit may feed into the suction side of the pump to mix with the secondary heated water. In this mode, the pump performs a dual function: it acts to pump water into the store, and also to recirculate water within the system. The balancing of flows around the circuit is achieved by adjustment of regulating valves. In this way, the temperature of the water exiting the heat exchanger is increased to heat the return water, such that the mixture of the two achieves the required temperature.

In the second mode, the return water from the hot water circuit may be fed back into the hottest part of the heating circuit before returning to the store. By locating the thermostat in the mixed flow from the two circuits i.e. the pumped return circulation circuit from the taps and the domestic hot water heating circuit, the water in the heating circuit may be heated to a higher temperature than that required in the store for sterilisation

The invention in its various aspects is defined in the independent claim below, to which reference should now be made. Advantageous features are set forth in the dependant claims.

A preferred embodiment of the invention is described in more detail below and takes the form of a hot water installation is described comprising a storage vessel for holding a thermally stratified store of hot water; and a water heating circuit externally of the storage vessel. The vessel has, at the bottom, a connection for a cold feed for water entering the storage vessel and a feed to the external heating circuit, and, at the top, a connection for feeding hot water from the external heating circuit into the vessel and for delivering hot water as required on demand. The hot water installation is particularly useful as a domestic hot water installation. The installation allows existing hot water cylinders to be converted to be suitable for condensing boilers to provide an improved conversion of fuel to energy and heat-up rate for domestic hot water due to the external counter flow heat exchange compared to the normal heating coil within the vessel.

Embodiments of the invention will now be described in more detail by way of example with reference to the drawings in which:
FIGURES 1 , 2, 3, 4, 5, 6, 7 and 9 show seven versions of domestic hot water installations;
FIGURES 4A, 4B, 4C and 4D are diagrammatic sections through stores having convex and concave bases;
FIGURE 4E is a diagrammatic section through the top of the store;
FIGURE 8 is a diagrammatic vertical section through the intermediate heat exchanger of Fig.7;
FIGURE 10 shows a detail of Figure 9;
FIGURES 11 and 12 show alternative arrangements of the embodiment of Figure 1 ;
FIGURE 13 shows in detail the operation of the embodiment of Figure 1;
FIGURE 14 shows an alternative arrangement of Figure 3;
FIGURE 15 shows a detail of Figure 14; and
FIGURES 16 to 18 show diagrammatic sections of part of a domestic hot water installation.

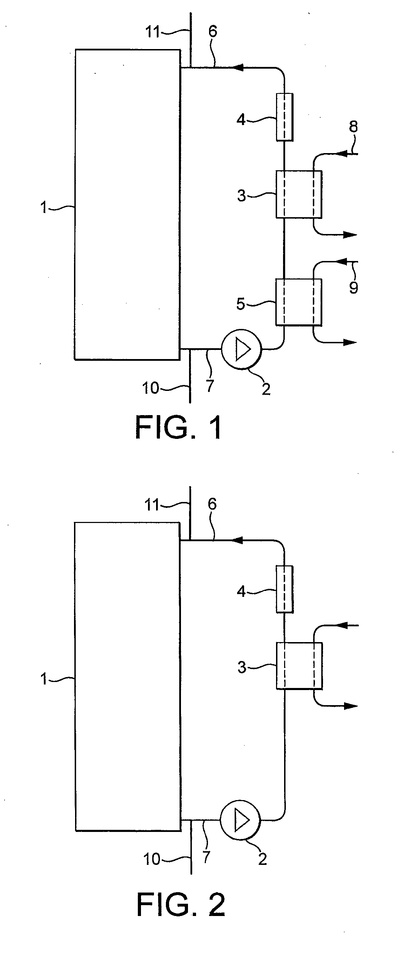

The systems shown in Figs.1 to 7 are designed to recover (re-heat) a hot water store using multiple (2 or more) heat sources. Water to be heated is passed through each heat source in series, thereby allowing the relative amount of energy drawn from each heat source used to be controlled.

Whilst the heat exchangers are shown in the figures in the vertical plane (which is the plane required for units having four connections to allow them to vent), the heat exchangers for the present invention may be installed with the plate surface area horizontal or in any plane.

By arranging the heat sources so that the heat source that operates most efficiently at lower temperatures is used first to heat up the coldest water, with the heat source that operates most efficiently at highest temperatures being used last to heat the water to its final temperature, maximum overall system efficiency is increased.

The water can be heated by a single heat exchanger e.g. a solar unit, or a combination of heat exchangers in series.

The system of the present invention utilizes the stratification of water when heated to increase the efficiency of heat transfer and to minimise and prevent the development of Legionella by keeping the water within the system at temperatures where Legionella do not propagate. Water is heated externally of the hot water store which, due to stratification, has hot water in it at the top that is at a temperature where Legionella bacteria are killed over time and colder water at the bottom at a temperature where bacteria can not develop within the period required to fill the vessel with cold water before it is heated (which typically would be one to two hours). A further way to prevent propagation is to provide water at the bottom of the unit which has already been heated by the external heat exchanger to a temperature (typically more than 50°C) that kills bacteria.

The three heat sources to.be typically considered are:
1. Primary system: typically remote boiler systems, or Combined Heat and Power plants (CHP) that will operate more efficiently with lower primary return temperatures i.e. more fuel converted to heat by extracting heat from products of combustion.
2. Electric Heater: used as high temperature source as conversion efficiency of electrical energy to heat is unaffected by temperature in the range of temperatures being considered.
3. Electric heater used as back up and standby as alternative heat source.
   3a. Electric heater to provide choices for managing and utilising the output from a CHP Plant producing both electricity and heat where situations may arise when it is advantageous to provide an electrical load for the CHP plant.

The mechanism for this loading is the remote controlling of the time to heat the stratified store either with the heat from the CHP or other heat source or electricity. This is achieved by measuring the capacity available in the store and the demand pattern for the hot water by monitoring the store either by measuring the level of hot water in the store or measuring flows into and out of the store and conditions when the store is either full of hot water or full of cold water. The purpose of this is to provide a means of providing a local thermal energy store in buildings in the form of domestic hot water as an alternative to known methods where tanks are used to store primary heating water at the CHP power plant or in the primary heat supply system.

A further heat source could be a solar panel or other renewable energy source which typically provide heat at low temperature.

Figure 1 shows a heat source used to heat stored water. The pump 2 circulates cold water either from the base 7 of the store within the storage vessel 1 , or from the lowest point in the store, through to the first heat exchanger 5 where it is heated by the heat source 9. The heat exchanger 5 allows heat to be transferred from the heat source 9 to the store water without mixing of the separate circuits. Typically, the heat source 9 is at a relatively low temperature.

Having passed through the first heat exchanger 5, the store water passes to a second heat exchanger 3 where it is further heated by the primary heat source 8.

Finally, the store water passes through an electric heat source 4 and is heated to the final target temperature before returning to the top of the store 1 along a path 6. If the heat exchangers earlier in the circuit path are able to raise the water temperature to the desired final temperature, at least the electrical heat source can be omitted from the circuit.

In the system shown in Figure 2, there are only two heat sources; the primary heat exchanger 3 and the electric heat source 4.

The amount of heat input from the primary heat source 8 to the store water can be controlled by altering the flow rate or the temperature of the heat source 8 supplied to the primary heat exchanger 3.

Likewise, the amount of heat input from the heat source 9 to the store water can be controlled by altering the flow rate or temperature of the heat source 9 supplied to the heat exchanger 5.

The amount of heat input from the electric source 4 can be set by controlling the power supplied to the electric heating element.

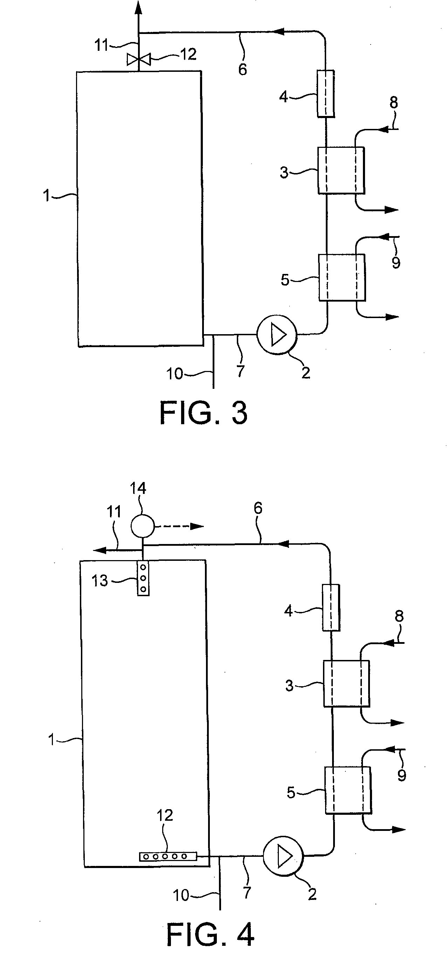

As shown in Figure 3, the heating circuit can be connected to a store 1 using cold feed 10 and hot draw-off 11 tappings. Other tappings, such as dedicated tappings, may also be used. In this way, the circuit is adaptable to be used with stores using less efficient methods for heating water such as those incompatible with a condensing operation of boilers or combined heat and power installations because they cannot provide the low primary return water temperatures provided by embodiments of the present invention.

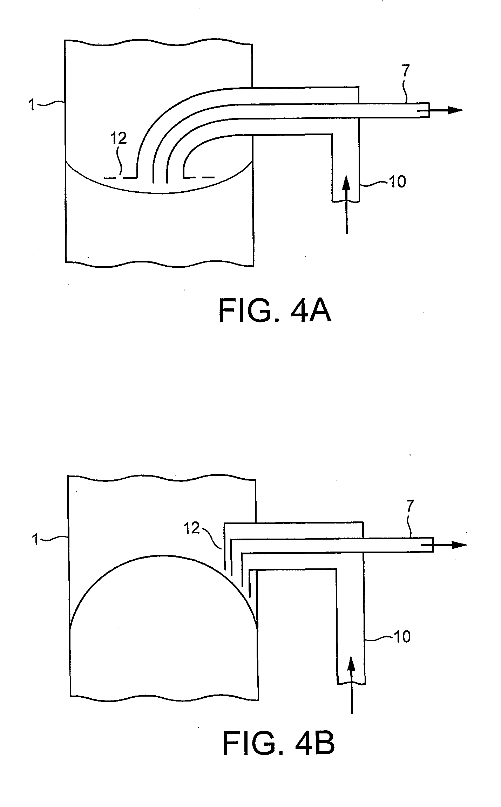

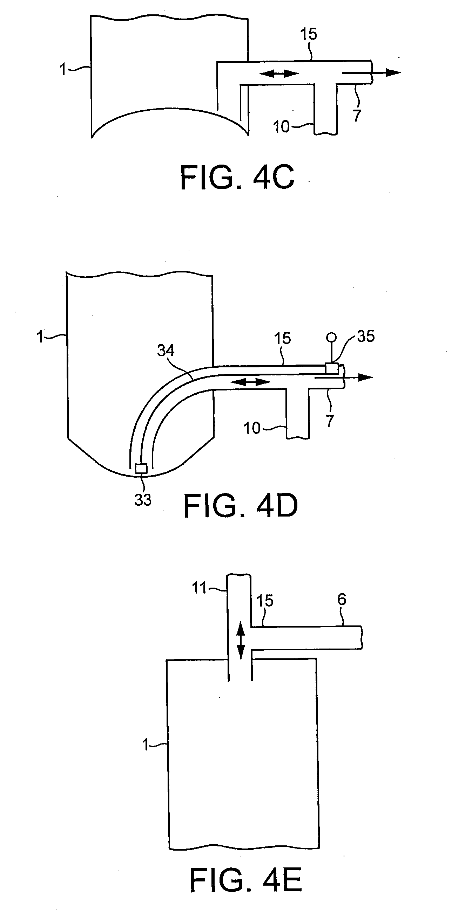

As shown in Figure 4, a diffuser tube 12 or similar baffle system may be used to combine the cold feed 10 and the feed 7 to the heating circuit into a single tapping or pipe within a pipe construction 15. In this way, it is ensured that water is only drawn from the lowest point in the store. Although all figures show the store having a flat bottom, it should be noted that the system of the present invention could be used with stores having convex or concave bottoms. Diffusers for use with stores of these types may be inserted through the tapping in existing standard vessels. Figures 4A and 4B show sections through stores having respectively concave and convex bases, and further shows how the water is injected into and removed from the base of the store.

Figures 4C and 4D show yet further alternative sections through stores 1, having respectively convex and concave bases, and pipe constructions 15. The pipe constructions or connections 15 are for cold water entering the store 1 and for feeding the cold water to the external heating circuit. The connections 15 allow cold water to flow in two directions within the pipe construction 15. A temperature sensor 33 is shown in Figure 4D, which can detect the temperature of the water at the bottom of the store 1. The temperature sensor 33 is located at the bottom of the store 1 and projects from the end of the pipe construction 15. A cable 34 electrically connected to the sensor 33 extends within the pipe construction 15 and exits the pipe construction 15 through a gland in a through hole 35 in the wall of the pipe construction 15 outside the store 1. The cable 34 can be electrically connected to a suitable device for extracting temperature information as required.

A similar arrangement of pipe constuctions 15 can be found at the top of the store 1 as shown in Figure 4E. This pipe construction 15 is for feeding hot water from the external heating circuit into the vessel and for delivering hot water on demand. It allows hot water to flow in two directions.

A baffle 13 may also be fitted into the draw-off point at the top of the store, along with an optional safety relief valve 14. The baffles 12,13 help prevent turbulence within the store 1 thus further assisting in maintaining stratification. An alternative baffle arrangement would be to provide a spiral tube, fed in through an aperture in the top of the vessel, or a disk constructed from a material that will spring into a disk shape when inserted through the aperture, distribution holes being provided in the flexible material covering the device such as PTFE.

The heating rates of the heat sources can be adjusted by altering the flow rate of the store water 1 through the heat sources 3,4,5. This circulation flow rate can be pre-set and fixed, or alternatively may be varied during operation to achieve different rates of heating and recovery (for example, to ensure water is available under conditions of draw-off from the taps, heated water being drawn from the store and also directly from the heating circuit). This is particularly advantageous as the arrangement permits improved use of the volume of the store 1, and supplements any draw-off with water from the heating circuit. In this way, if for example the temperature of water drawn from a tap falls below a pre-determined level, the supply from the cylinder can be cut off and water can be supplied directly from the heating circuit instead.

The heating input from each of the heat exchangers is separately and independently varied or optimised in terms of economy and counter-flow heat exchange efficiency through the internal control of the flow in their primary circuits and the secondary outlet temperature from the heat exchanger. The circulation flow rate may be set by using of a variable speed pump at a particular rate, by controlling the electricity supply to a fixed speed pump, or by using water valves external to the pump (optionally in conjunction with a by-pass circuit).

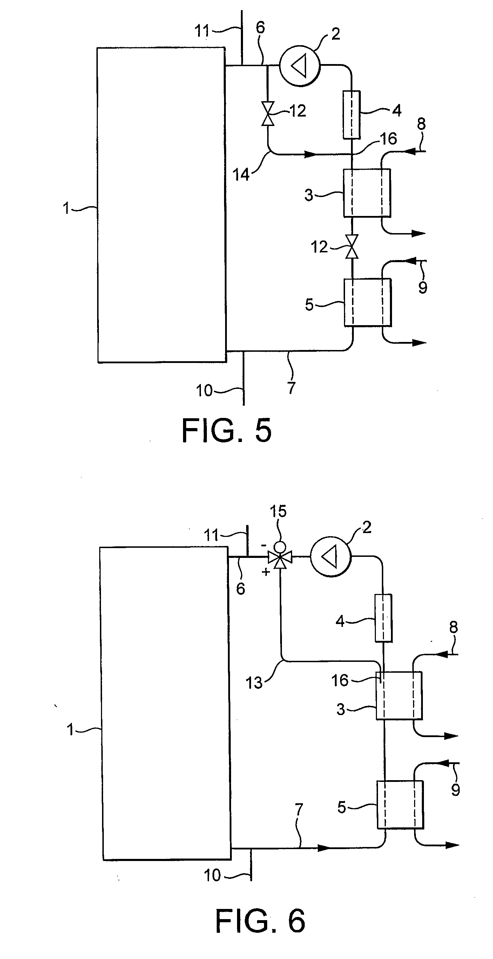

The location of the pump 2 within the circuit is not specific. Figure 1 shows how the pump 2 may be fitted into the circuit near the base 7 of the store. Alternatively, Figure 5 shows how the pump 2 may be fitted adjacent to the electric heat source 4 in conjunction with a return loop 14. The return loop 14 feeds hot water from pump 2 back into the outlet from the primary heat exchanger 3. Balancing valves 12 may be used to adjust and set flow rates around the circuit.

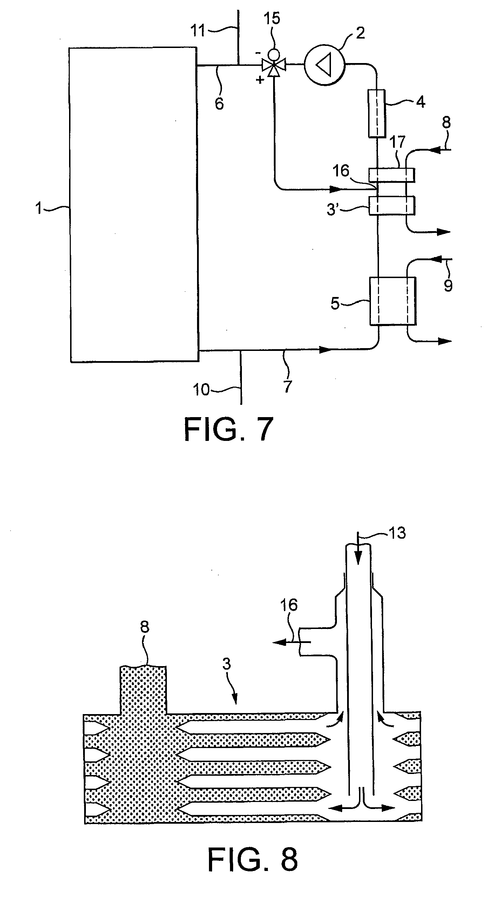

Figure 6 shows how a three-port thermostatic valve 15 can be used to control the flow rates through a by-pass 16 and the connection 6. The valve 15 re-circulates water through the by-pass 16 until it senses rising temperature, at which time it allows water to pass onto the connection 6. The valve 15 operates to cause the store water to achieve a set point temperature, typically 60 - 65°C. The by-pass 16 may inject water into the valve 15 directly from the outlet of the heat exchanger 3, as shown in Figure 7. In this way, the thermo valve 15 will sense primary heat input to the heat exchanger 3 without store circulation through the store flow and return 7, 6.

To obtain a similar effect, the primary heat exchanger 3 can be split into two sections 3', 17 as shown in Figure 7. The by-pass/primary heat exchanger 17 is used to allow the heat input from the primary heat source 8 to be detected by the thermostatic valve 15, and thereby allow the flow of store water through the primary heat exchanger 3 to start.

The use of external electric heating in combination with a heat exchanger in combination with a heat exchanger from a boiler allows for much of the energy needed to provide domestic hot water to be produced from heating systems where the flow temperature of the heating water is reduced when the heating demand is lower in order to control room temperatures in buildings. Under these circumstances the heating water (say at 45°C) is at an insufficient temperature to provide domestic hot water (usually required at about 60°C) The system is also capable of raising the wintertime cold water temperature from around 10°C to 20°C up to 60°C or where the temperature is lower the remaining heating coming from the electric heater.

By measuring the amount of cold and hot water in the store held in the storage vessel either by temperature sensors detecting the stratified interface between hot and cold water or by measurement of flows of hot and cold water in and out of the store, information can be obtained on hot water usage patterns to optimise the overall efficiency and cost of heating the water, and of using a unit comprising a combined heat and power plant to allow the time to be chosen when the store is reheated to coincide with times when it is optimal to run the CHP unit to generate electricity and to utilise the waste heat produced.

The invention allows existing hot water cylinders to be converted to be suitable for condensing boilers and, by selection of appropriate heat exchanger parameters, to provide an improved heat-up rate for domestic hot water.

In one variation of the system, the arrangement supplies hot water from the heating circuit for the store directly to the taps if water coming from the top of the store drops to a low temperature or mixes with the water from the store to achieve a set temperature.

Most existing stores have the heat exchangers 3, 5 or 4 within the store.

Such an arrangement results in mixing in the store.

The temperature of the returning water from the heat exchanger has to be above the temperature required in the store e.g. for a required water temperature of 60°C within the store, the primary return temperature of the heat exchanger will be 65°C.

According to the present invention, the temperature of the returning primary water from the heat exchanger only has to be above the incoming cold water temperature e.g. 10°C to 25°C. The flow of this primary water is controlled by two way valves part of a variable flow primary circuit.

Condensing operation requires a return of 50°C or lower.

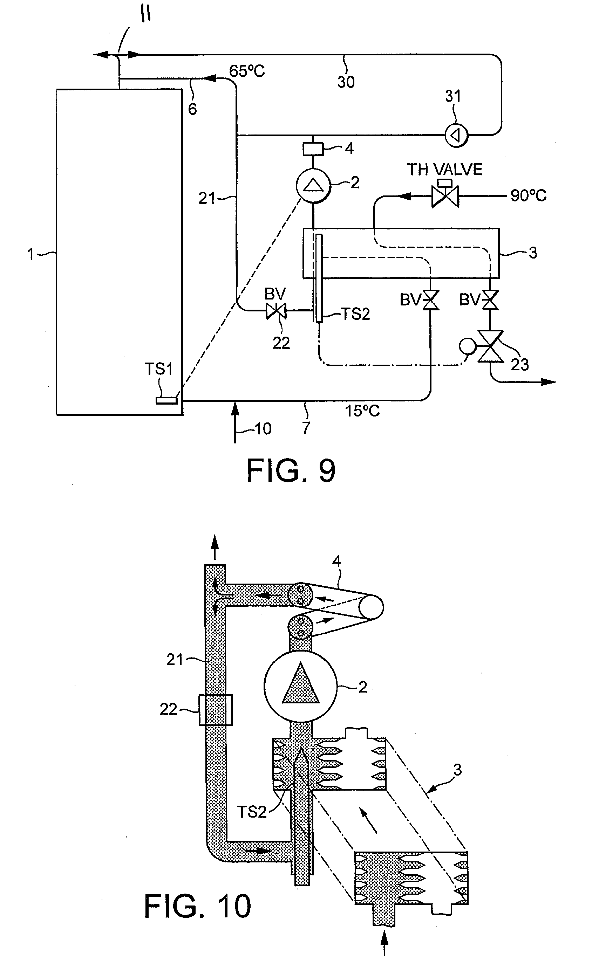

In the installation shown in Figures 9 and 10, water temperature detected at the inlet 7 by thermostat TS1 is used to control the pump 2. The pump 2 has a restricted bypass 21 controlled by a restriction 22 and runs when heating of the secondary water is required.

A further thermostat TS2 in the secondary path of the heat exchanger 3 controls a fully modulating valve 23 that controls the flow of primary heat source 8 to a value sufficiently low to ensure that the temperature of the primary return is below a predetermined value e.g. 30°C. By positioning the second thermostat in the secondary of the heat exchanger 3 and maintaining the flow therethrough by the pump 2, an immediate response to a change in demand is obtained.

A hot water delivery circuit 30 may lead from the output port 6 to a series of taps and include a pump 31 (which returns unused hot water at its slightly reduced temperature, e.g. 50°C to the output of the electric heater 4 where it mixes with the water heated by the heating circuit. To obtain the required store temperature of e.g. 60°C the output temperature of the heating circuit would then need to be at a higher temperature than the unused hot water.

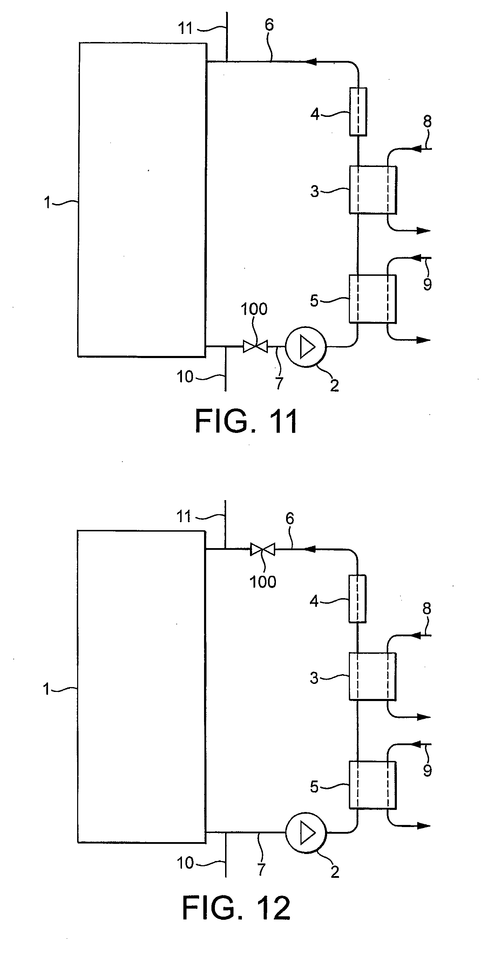

A further embodiment of the system is shown in Figures 11 and 12. They are similar to the embodiment of Figure 1, and the same reference numerals are used to identify the same features. A non-return valve 100 is provided in the external water heating circuit so that the flow of water in the external water heating circuit is in one direction only, that is the direction that the pump 2 circulates the water. The flows of water in the storage vessel change direction when charging with heat and discharging.

In the embodiment of Figure 11, a non-return valve is provided at the connection into the storage vessel 1 at the bottom of the vessel. In the embodiment of Figure 12, a non-return valve is provided at the connection into the storage vessel 1 at the top of the vessel. However, the non-return valve 100 can be positioned anywhere along the path 6 of the external water heating circuit.

The purpose of the non-return valve 100 is to prevent unusual conditions that can occur when the temperature of the external heat exchange circuit (though insulated) drops when water has not been circulating and heated for a long period. Water cannot circulate for a long period for various reasons. For example, overnight when there is no hot water demand, when the water in the circuit cools because the primary circuits and heat exchange circuits are off when the storage vessel 1 is full of domestic hot water or when the heat exchange circuits are not heating because the heating of the store 1 is timed to heat it at least cost when cost of heat from a primary source is minimised.

When there is a substantial temperature difference between the water in the storage vessel 1 and the water in the external heating circuit, the high density of the cool water in the external heating circuit causes it to fall towards the bottom of the store 1 with less dense hot water from the store entering the external heating circuit and raising its temperature and then being cooled.

This cooling of the water in the heating circuit can start reverse circulation of the water in the circuit (that is in the opposite direction to the direction the pump 2

A benefit of providing a non-return valve 100 at the connection into the storage vessel 1 at the bottom of the vessel is that the water passing through the valve will mainly be cool or cold, hence the valve 100 is less likely to develop deposits of solids on the valve from lime scale or other minerals in the water, which can cause the valve to block-up and fail.

The non-return valve 100 may be activated to only allow flow in one direction if the temperature of the circulating water in the external heating circuit drops below a particular temperature, if reverse flow is sensed or a combination of these. The non-return valve may not be permanently activated. Suitable electronic sensors may be provided in the external heating circuit to switch an electrically activated non-return valve on and off accordingly or the valve is self-acting on detecting reverse flow.

This type of non-return valve may also be provided in the other embodiments of the system described herein.

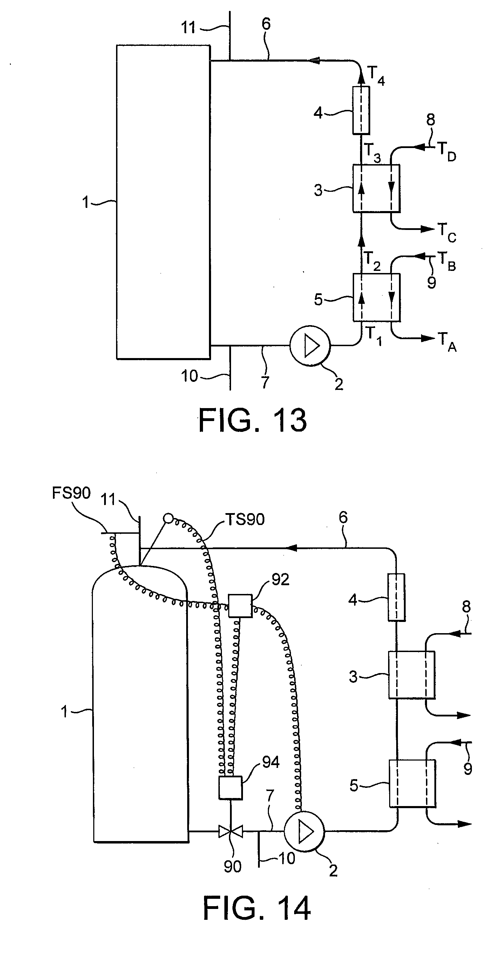

Figure 13 shows the flow of water in the external heating circuit of the embodiment of Figure 1. That is the flow of water through the arrangement of heat exchangers 3 and 5 connected in series in the external circuit or secondary circuit heating the fluid in the store 1.

The flow in the heat exchangers 3 and 5 is a counter flow. That is, the water flowing in the hot water circuit path flows in the opposite direction to the fluid in the separate circuits or primary circuits of the heat exchangers 3 and 5, which heats the water in the hot water circuit path.

The temperature of the water in the hot water circuit path entering a heat exchanger 3 or 5 is colder than the water exiting the heat exchanger. Hence, the temperature T1 of the secondary water entering the first heat exchanger 5 is lower than the temperature T2 of the water exiting the first heat exchanger 5 and entering the second heat exchanger 3. The temperature T2 is lower than the temperature T3 of the water exiting the second heat exchanger 3 and entering the heat source 4. The temperature T3 is lower than the temperature T4 of the water exiting the heat source 4.

temperature T3 is lower than the temperature T4 of the water exiting the heat source 4.

The fluid in the separate circuits or primary circuits of the heat exchangers 3 and 5 enters at a higher temperature than it exits. Hence, the temperature TB of the fluid in the separate circuit or primary circuit entering the first heat exchanger 5 is greater than the temperature TA of the fluid exiting this heat exchanger 5. The temperature TD of the fluid in the separate circuit or primary circuit entering the second heat exchanger 3 is greater than the temperature TC of the fluid exiting this heat exchanger 3.

By using counter flow in the heat exchangers 3 and 5 the maximum amount of heat can be beneficially extracted from any specific primary source.

Where a primary heat source such as solar energy has a variable quality in terms of temperature of heat supply and quantity, the external heat exchanger arrangement with this counter flow arrangement results in more effective use of solar energy. This is the case whether the solar energy comes directly from a solar panel or from a panel linked to a primary store for heat associated with the solar panel.

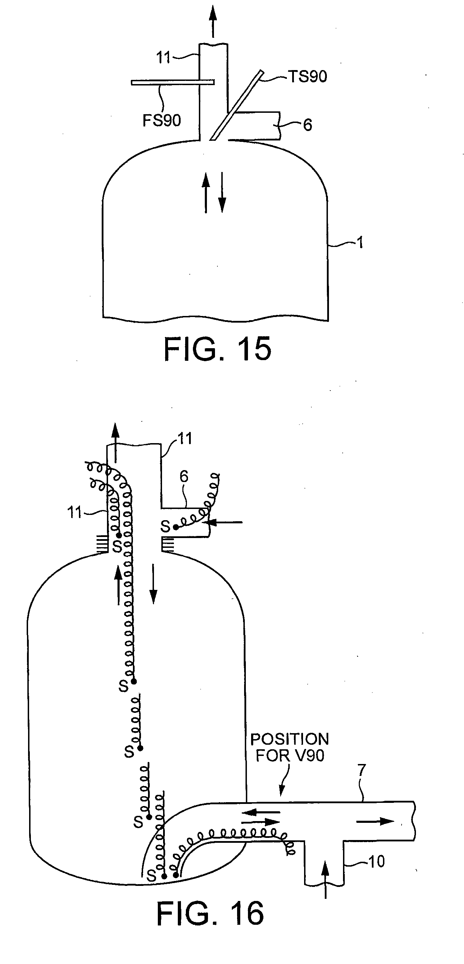

Figures 14 and 15 show a variation of the embodiment of Figure 3.

In this embodiment, a valve 90 is located in between the cold feed 10 and the pipe passing through the wall at the bottom of the store 1.

As mentioned above, this pipe 7 can carry water that flows in two directions. Water can be driven into the store 1 and through the store from cold feed 10 to outlet 11. Alternatively, the water can be drawn from the store 1 by pump 2. The connection 11 at the top of the store performs a similar two directional flow function.

The valve 90 controls the amount of water entering the store 1 or the amount of water being drawn from the store under different operating conditions. The valve can be modulated between fully open, through partially open, to fully closed.

When valve 90 is closed, all incoming water through the cold feed 10 is prevented from entering the store 1. Instead, the water passes directly through the external heating circuit.

Furthermore, when the valve 90 is closed it prevents the reverse circulation in the external heating circuit described above. That is, it acts as a non-return valve.

The conditions to signal the valve 90 to close and to perform this function are that there is no flow of water coming out of the outlet at the top of the store 1 and the pump 2 is not pumping (it is off) as the store 1 is full of hot water. The flow of water coming out of the outlet of the store 1 is detected by temperature sensor TS90, which is located in the outlet of the store 1. The temperature sensor is electrically connected to the valve 90 via control unit 94.

When the store 1 is full of cold water the valve 90 can be closed so that hot water continues to be delivered to the outlet 11, but the hot water is supplied only from the heat exchange circuit. Alternatively, valve 90 can modulate the respective flows to provide mixed condition water to the outlet area fed by water from the store 1 and from the heating circuit.

Under other conditions, the valve 90 is open or partially open.

When valve 90 is open, water passes into the store 1 or is drawn out of the store 1 and passes through the external heating circuit to supply hot water as described above.

The effect of the valve 90 when modulating between open and closed is to vary the relative flows of water being drawn off from the external heating circuit and the store 1.

When water is drawn off from tappings 11 two sources of hot water are used, the water in store 1 and the water from the external heating circuit. Hence, the temperature of the water supplied to the tappings 11 is affected by the relative amounts of water from the store 1 and water from the heating circuit.

The level of mixing from these two sources at the top of the store 1 at the interface between the water in the store 1 and the inlet for water from connection 6 to the store 1 and the outlet from the store 1 is sensed with temperature sensor TS90. This sensed temperature can be used to modulate the valve 90 and hence the flow rate through the heat exchange circuit. Thus, the relative amounts of water and temperature of the water from the store 1 and water from the heating circuit that are supplied to the taps 11 are controlled.

That is to say, the temperature sensor TS90 controls the valve 90 in outlet 11 so that some of the cold water entering through pipe 10 is drawn around the pumped heating circuit and some is drawn through the store 1 when there is a demand from outlet 11 for hot water.

A flow sensor FS90 is installed in outlet 11 to detect a flow demand for hot water from store 1. The flow sensor FS90 is electrically connected to the valve 90 and the pump 12, by control unit 92. If the pump 12 had been switched off as the store 1 was full of hot water, the flow sensor senses when there is a demand for water from taps 11 and causes the pump to switch on. it also causes valve 90 to open or modulate. The valve 90 and the pump 12 are controlled by the temperature sensor TS90 and the flow sensor FS90.

The temperature sensor TS90 and the flow sensor FS90 are flexible sensors that locate themselves in the vessel by gravity or by using arrangements such that they spring into position. Alternatively, the sensors may be located within the disk (described in relation to Figure 4) or bag, which springs into shape when inserted into the store 1. The disk or bag is used for electrical insulation. The sensors themselves are fixed or woven into the bag or disk.

Alternatively, the pipe or entry point to the store 1 carries the sensors.

For all these arrangements, the sensor leads are led out through glands. The location of the valve 90 of Figures 14 and 15 means that the lifetime of the valve 90 is longer than the lifetime of the valve 12 of Figure 3. This is because the valve 90 is being mounted on a pipe carrying mainly cold water to be heated and there is less build-up of limescale and other deposits than the hot water that passes through valve 12 of Figure 3. Furthermore, there is always a means for water expansion from vessel one and a route for air to vent from the vessel.

Figure 16 illustrates in more detail a preferable arrangement that is similar to the connections at the top and bottom of the store 1 illustrated in Figure 3, Figures 4, Figures 4A to 4E and Figure 9. In the connection illustrated in Figure 16 the fluid flows in different directions in the connection under different conditions.

Information about this flow is obtained from temperature sensors installed in the pipe or in the store 1 identified as S.

Temperature sensors can be provided in the form of surface mounted sensors or sensors in pockets. Preferably, sensors S are installed within the paths of the water flow with the signalling leads brought out through gland arrangements.

Typically, the sensors S are thermistors.

Preferably, multiple sensors are installed at each location. So that if a sensor fails there is another sensor in the same location to provide the information. Multiple sensors also provide a means for error checking of sensors to check that signals are valid.

Some typical locations of sensors S are identified in Figure 16. The sensors S are suspended from the top of the store 1 and they are connected to different lengths of electrical cable. The sensors are weighted so that they position themselves by gravity. The sensors detect the water temperature at different levels in the store 1.

The sensors can be suspended off the centre line of the outlet 11 by being supported from the diffuser 12 described above and illustrated in Figure 4.

Figure 16 also illustrates the typical concave shape of the top of a store 1 , which is a common feature of both horizontal and vertical stores. Figures 16, 17 and 18 illustrate different pipes for cold water entering and leaving the store 1 and three types of arrangement of the bottom of vertical stores 1.

The bottom of the store of Figure 16 is concave. The pipe enters on one side of the store, towards the bottom. A temperature sensor S lies on the bottom of the pipe and its electrical connection extends through the pipe.

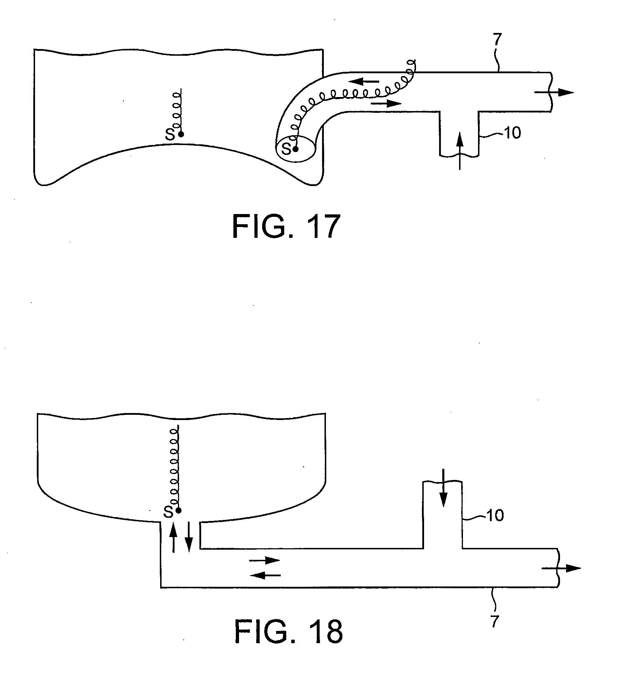

The bottom of the store of Figure 17 is convex. The cold water pipe enters on one side of the store, towards the bottom. A temperature sensor S lies on the bottom of the pipe and its electrical connection extends through the pipe.

The bottom of the store of Figure 18 is concave. The cold water pipe enters through the base of the store 1 in the centre of the very bottom of the store 1. An electrical connection for a temperature sensor S extends from the top of the store so that the temperature sensor lies in the opening of the pipe.

These devices for sensing and connection allow existing vessels that are internally heated to be easily adapted to use an external heating circuit.

This device provides the benefits of water storage with a continuous supply of hot water even when hot water in the store is exhausted. The volume and rate of flow of the water depends on the heat input available from the heat sources and heat exchangers and the respective flow rates through the store and through the heat sources and heat exchangers in series which can be varied and controlled by pump 2.

## Claims

1. A hot water installation comprising:
a storage vessel (1) arranged to store of hot water; and
an external water heating circuit comprising two or more heat sources (9, 8, 4) arranged in series;
wherein the storage vessel has only two connections, a first connection which is connected as a feed to the external heating circuit and is connected as a cold feed (10) to the storage vessel (1), and a second connection (11) for feeding hot water from the external heating circuit into the storage vessel and for delivering hot water from the external heating circuit as required on demand, so that in use the flow through each of the two connections of the storage vessel is reversible and hot water is supplied either from the storage vessel and/or directly from the external heating circuit.

2. A hot water installation according to claim 1 , wherein the heat source that is most effective at lower temperatures (9) is used first to heat up the cold water, and the heat source that operates most effectively at higher temperatures (8, 4) being arranged to heat the water to its final temperate.

3. A hot water installation according to claim 1 or 2, wherein the heat source that that serves to heat the water to its final temperature (4) is an electric heat source.

4. A hot water installation according to claim 3, wherein the heat source that serves to heat the water initially may be one or more of a solar panel or low grade waste heat.

5. A hot water installation according to claim 3 or 4, wherein the heat source that serves to heat the water upstream of the electric heat source may be one or more of remote boiler system, or heat from a combined heat and power plant.

6. A hot water installation according to any preceding claim wherein the water heating circuit includes a pump (2) to circulate water around the heating circuit and a control unit to control the pump to operate when the sensed temperature in the water heating circuit falls below a predetermined value.

7. A hot water installation according to claim 6, wherein the pump is arranged to prioritise water from the external heating circuit over that in the storage vessel on demand.

8. A hot water installation according to claim 6 or 7, wherein the pump (2) is a positive displacement pump which also acts as a non-return valve in the external heating circuit.

9. A hot water installation according to any of claims 6 to 8, wherein a bypass (16) is provided around the pump in order to permit convectional flow through the external heating circuit.

10. A hot water installation according to claim 9, wherein a sensing element or thermostat (15) is provided in the bypass such that in use liquid whose temperature is to be controlled is allowed to flow over the length of the sensing element or thermostat (15), and that the said thermostat is positioned in relation to the heat source or sources and the pump so that, even under pump failure, the sensing element or thermostat will sense the temperature of the water leaving the external heating circuit.

11. A hot water installation according to any preceding claim, wherein the storage vessel comprises a cylindrical vessel which is arranged to be installed with its axis substantially upright.

12. A hot water installation according to any preceding claim, wherein the water in the storage vessel is arranged to stratify vertically with the hot water occupying the upper part of the vessel.

13. A hot water installation according to claim 12, wherein the cold feed entry of the storage vessel is provided with a diffuser (12) in order to prevent the stratified level between the hot and cold water from being disturbed.

14. A hot water installation according to claim 13, wherein the diffuser (12) is of flexible construction, expandable after insertion through the inlet part of the vessel.

15. A hot water installation according to claim 13 or 14, wherein the diffuser (12) is a sleeve which is arranged to be inflated by incoming water pressure as it enters the vessel.

16. A hot water installation according to any of claims 13 to 15, wherein the diffuser is weighted so as to lie on the bottom of the vessel.

17. A hot water installation according to any of claims 12 to 16, wherein a temperature sensor controlling the pump is arranged in the storage vessel at a height where in use it is desired the stratified interface to exist between hot and cool layers as a function of the level of demand.

18. A hot water installation according to any of claims 12 to 17, wherein two or more temperature sensors (TS1, TS2) are arranged in the storage vessel at various heights so that the height of the stratified interface between hot and cool layers can be varied as a function of the level of demand.

19. A hot water installation according to claim 18, having means for measuring the flow of hot water out of the vessel and/or at the cold feed in order to measure the hot water demand.

20. A hot water installation according to any preceding claim comprising a non-return valve (100) in the water heating circuit which arranged to prevent reverse water flow out from the top of the storage vessel and through the water heating circuit.

21. A hot water installation according to claim 19, wherein the non-return valve (100) is located in the connection for the cold feed for water entering the storage vessel and the feed to the external heating circuit.

22. A hot water installation according to any preceding claim, wherein the hot water delivery circuit is recombined with the external heating circuit upstream of the second or delivery connection of the storage vessel.

23. A hot water installation according to any preceding claim, wherein the water heating circuit includes a temperature sensor in one or both of the storage vessel connections to operate the pump or a valve to control the quantity of hot water or the stratification in the storage vessel.

24. A hot water installation according to claim 23 having a modulating valve (90) which attenuates the flow rate in the water heating circuit and the vessel to control the temperature of the hot water delivered.

## Patentansprüche

1. Heißwasserinstallation, Folgendes umfassend:
einen Speicherbehälter (1), der zum Speichern von Heißwasser angeordnet ist; und
einen externen Wasserheizkreislauf, der zwei oder mehr in Serie angeordnete Wärmequellen (9, 8, 4) umfasst;
wobei der Speicherbehälter nur zwei Anschlüsse aufweist, einen ersten Anschluss, der als Einspeisung in den externen Heizkreislauf angeschlossen ist und der als Kaltwassereinspeisung (10) in den Speicherbehälter (1) angeschlossen ist, und einen zweiten Anschluss (11) zur Heißwassereinspeisung vom externen Heizkreislauf in den Speicherbehälter und zur Heißwasserzuführung vom externen Heizkreislauf auf Abruf nach Bedarf, so dass der Durchfluss durch jeden der zwei Anschlüsse des Speicherbehälters im Gebrauch umkehrbar ist und Heißwasser entweder vom Speicherbehälter und/oder direkt vom externen Heizkreislauf zugeführt wird.

2. Heißwasserinstallation gemäß Anspruch 1, wobei die Wärmequelle, die bei niedrigen Temperaturen (9) am wirksamsten ist, zuerst dazu benützt wird, das Kaltwasser aufzuheizen, und die Wärmequelle, die bei höheren Temperaturen (8, 4) am wirksamsten betrieben wird, dazu angeordnet ist, das Wasser bis zu dessen Zieltemperatur aufzuheizen.

3. Heißwasserinstallation gemäß Anspruch 1 oder 2, wobei die Wärmequelle, die dazu dient, das Wasser bis zu dessen Zieltemperatur (4) aufzuheizen, eine elektrische Wärmequelle ist.

4. Heißwasserinstallation gemäß Anspruch 3, wobei die Wärmequelle, die dazu dient, das Wasser anfänglich aufzuheizen, eine oder mehrere aus einem Solarmodul oder einer niederwertigen Abwärme sein kann.

5. Heißwasserinstallation gemäß Anspruch 3 oder 4, wobei die Wärmequelle, die dazu dient, das Wasser stromaufwärts der elektrischen Wärmequelle zu erhitzen, eine oder mehrere aus einem entfernten Kesselsystem oder Wärme aus einem Heizkraftwerk sein kann.

6. Heißwasserinstallation gemäß einem der vorangehenden Ansprüche, wobei der Wasserheizkreislauf eine Pumpe (2) zum Zirkulieren des Wassers im Heizkreislauf und eine Kontrolleinheit zum Kontrollieren der Pumpe umfasst, so dass diese in Betrieb geht, wenn die gemessene Temperatur im Wasserheizkreislauf einen vorher bestimmten Wert unterschreitet.

7. Heißwasserinstallation gemäß Anspruch 6, wobei die Pumpe dazu angeordnet ist, Wasser vom externen Heizkreislauf gegenüber jenem im Speicherbehälter nach Bedarf zu priorisieren.

8. Heißwasserinstallation gemäß Anspruch 6 oder 7, wobei die Pumpe (2) eine Druckpumpe ist, die im externen Heizkreislauf auch als Rückschlagventil wirksam ist.

9. Heißwasserinstallation gemäß einem der Ansprüche 6 bis 8, wobei um die Pumpe herum eine Bypass-Leitung (16) vorgesehen ist, um eine Kondiktionsströmung durch den externen Heizkreislauf zu ermöglichen.

10. Heißwasserinstallation gemäß Anspruch 9, wobei in der Bypass-Leitung ein Messelement oder Thermostat (15) vorgesehen ist, so dass im Gebrauch die Flüssigkeit, deren Temperatur geregelt werden soll, über die Erstreckung des Messelements oder Thermostats (15) strömen kann, und dass der Thermostat im Verhältnis zur Wärmequelle oder den Wärmequellen und der Pumpe so positioniert ist, dass das Messeelement oder der Thermostat auch bei einem Pumpenausfall die Temperatur des den externen Heizkreislauf verlassenden Wassers zu messen vermag.

11. Heißwasserinstallation gemäß einem der vorangehenden Ansprüche, wobei der Speicherbehälter einen zylindrischen Behälter umfasst, der dazu angeordnet ist, mit seiner Achse im wesentlichen aufrecht stehend installiert zu werden.

12. Heißwasserinstallation gemäß einem der vorangehenden Ansprüche, wobei das Wasser im Speicherbehälter so verteilt ist, sich vertikal schichtet, wobei das Heißwasser den oberen Teil des Behälters belegt.

13. Heißwasserinstallation gemäß Anspruch 12, wobei der Kaltwassereingang des Speicherbehälters mit einem Diffusor (12) versehen ist, um eine Störung des Schichtniveaus zwischen dem Heiß- und Kaltwasser zu verhindern.

14. Heißwasserinstallation gemäß Anspruch 13, wobei der Diffusor (12) flexibel ausgeführt ist, sodass er nach der Einführung durch das Einlassteil des Behälters erweiterungsfähig ist.

15. Heißwasserinstallation gemäß Anspruch 13 oder 14, wobei der Diffusor (12) eine Hülse ist, die dazu angeordnet ist, durch den Druck des ankommenden Wassers, wenn dieses in den Behälter eintritt, aufgepumpt zu werden.

16. Heißwasserinstallation gemäß einem der Ansprüche 13 bis 15, wobei der Diffusor so gewichtet ist, dass er am Boden des Behälters aufliegt.

17. Heißwasserinstallation gemäß einem der Ansprüche 12 bis 16, wobei ein die Pumpe kontrollierender Temperatursensor im Speicherbehälter in einer Höhle angeordnet ist, wo im Gebrauch die Schichtgrenzfläche zwischen heißen und kalten Schichten in Abhängigkeit vom Bedarfsgrad vorhanden sein soll.

18. Heißwasserinstallation gemäß einem der Ansprüche 12 bis 27, wobei zwei oder mehr Temperatursensoren (TS1, TS2) im Speicherbehälter auf unterschiedlichen Höhen angeordnet sind, so dass die Höhe der Schichtgrenzfläche zwischen heißen und kalten Schichten in Abhängigkeit vom Bedarfsgrad variiert werden kann.

19. Heißwasserinstallation gemäß Anspruch 18, das Mittel zum Messen des Durchflusses von heißem Wasser aus dem Behälter und/oder an der Kaltwassereinspeisung aufweist, um den Heißwasserbedarf zu messen.

20. Heißwasserinstallation gemäß einem der vorangehenden Ansprüche, die ein Rückschlagventil (100) im Wasserheizkreislauf umfasst, das dazu angeordnet ist, den Wasserrückfluss aus dem oberen Teil des Speicherbehälters und durch den Wasserheizkreislauf zu verhindern.

21. Heißwasserinstallation gemäß Anspruch 19, wobei das Rückschlagventil (100) im Anschluss der Kaltwassereinspeisung für das in den Speicherbehälter einfließende Wasser und der Einspeisung in den externen Heizkreislauf angeordnet ist.

22. Heißwasserinstallation gemäß einem der vorangehenden Ansprüche, wobei der Kreislauf zur Heißwasserzuführung mit dem externen Heizkreislauf stromaufwärts des zweiten oder Zuführungsanschlusses des Speichergefäßes kombiniert ist.

23. Heißwasserinstallation gemäß einem der vorangehenden Ansprüche, wobei der Wasserheizkreislauf einen Temperatursensor in einem oder beiden Speicherbehälteranschlüssen umfasst, um die Pumpe oder ein Ventil zur Kontrolle der Heißwassermenge oder der Stratifizierung im Speicherbehälter zu betreiben.

24. Heißwasserinstallation gemäß Anspruch 23 mit einem Modulationsventil (90), das die Durchflussrate im Wasserheizkreislauf und im Behälter dämpft, um die Temperatur des zugeführten Heißwassers zu kontrollieren.

## Revendications

1. Installation d'eau chaude comprenant :
un récipient (1) d'accumulation, agencé pour accumuler de l'eau chaude et
un circuit extérieur de chauffage de l'eau, comprenant deux sources (9, 8, 4) de chaleur ou plusieurs sources (9, 8, 4) de chaleur montées en séries ;
dans laquelle le récipient d'accumulation a seulement deux connections, une première connexion qui est reliée, en tant qu'alimentation, au circuit extérieur de chauffage et est reliée, en tant qu'alimentation (10) froide, au récipient (1) d'accumulation et une seconde connexion (11) pour envoyer de l'eau chaude du circuit extérieur de chauffage au récipient d'alimentation et pour fournir de l'eau chaude, à partir du circuit extérieur de chauffage, suivant ce qui est exigé, de sorte qu'en utilisation, le courant, passant dans chacune des deux connexions du récipient d'accumulation, est réversible et que de l'eau chaude est fournie soit à partir du récipient d'accumulation et/ou directement à partir du circuit extérieur de chauffage.

2. Installation d'eau chaude suivant la revendication 1, dans laquelle la source de chaleur, qui est la plus efficace à des températures (9) basses, est utilisée d'abord pour chauffer l'eau froide et la source de chaleur, qui opère le plus efficacement à des températures (8, 4) plus hautes, est agencée pour porter l'eau à sa température finale.

3. Installation d'eau chaude suivant la revendication 1 ou 2, dans laquelle la source de chaleur, qui sert à porter l'eau à sa température (4) finale, est une source de chaleur électrique.

4. Installation d'eau chaude suivant la revendication 3, dans laquelle la source de chaleur, qui sert à chauffer l'eau initialement, peut être l'une ou plusieurs d'un panneau solaire ou de la chaleur perdue à faible pouvoir calorifique.

5. Installation d'eau chaude suivant la revendication 3 ou 4, dans laquelle la source de chaleur, qui sert à chauffer l'eau en amont de la source de chaleur électrique, peut être une ou plusieurs d'un système de chaudière éloigné ou de la chaleur d'une centrale à chaleur et électrique combinée.

6. Installation d'eau chaude suivant l'une quelconque des revendications précédentes, dans laquelle le circuit de chauffage d'eau comprend une pompe (2) pour faire circuler de l'eau dans le circuit de chauffage et une unité de commande pour commander la pompe, afin qu'elle fonctionne lorsque la température détectée dans le circuit de chauffage de l'eau devient inférieure à une valeur déterminée à l'avance.

7. Installation d'eau chaude suivant la revendication 6, dans laquelle la pompe est agencée pour donner la priorité à de l'eau provenant du circuit extérieur de chauffage sur celle dans le récipient d'accumulation sur demande.

8. Installation d'eau chaude suivant la revendication 6 ou 7, dans laquelle la pompe (2) est une pompe volumétrique qui agit aussi en tant que clapet anti-retour dans le circuit extérieur de chauffage.

9. Installation d'eau chaude suivant l'une quelconque des revendications 6 à 8, dans laquelle une dérivation (16) est prévue autour de la pompe, afin de permettre d'avoir un courant de convection dans le circuit extérieur de chauffage.

10. Installation d'eau chaude suivant la revendication 9, dans laquelle un élément capteur ou un thermostat (15) est prévu dans la dérivation, de manière à ce que, en utilisation, du liquide, dont on doit se rendre maître de la température, est autorisé à s'écouler sur le tronçon de l'élément formant capteur ou le thermostat (15) et le thermostat est placé, par rapport à la source ou aux sources de chaleur et à la pompe, de manière à ce que, même si la pompe tombe en panne, l'élément formant capteur ou le thermostat détectera la température de l'eau quittant le circuit extérieur de chauffage.

11. Installation d'eau chaude suivant l'une quelconque des revendications précédentes, dans laquelle le récipient d'accumulation comprend un récipient cylindrique, qui est agencé pour être monté en ayant son axe sensiblement vertical.

12. Installation d'eau chaude suivant l'une quelconque des revendications précédentes, dans laquelle l'eau, dans le récipient d'accumulation, se stratifie verticalement avec l'eau chaude occupant la partie supérieure du récipient.

13. Installation d'eau chaude suivant la revendication 12, dans laquelle l'entrée d'alimentation froide du récipient d'accumulation est pourvue d'un diffuseur (12), afin d'empêcher de perturber le niveau stratifié entre l'eau chaude et l'eau froide.

14. Installation d'eau chaude suivant la revendication 13, dans laquelle le diffuseur (12) est d'un agencement souple, pouvant prendre de l'expansion après insertion dans la partie d'entrée du récipient.

15. Installation d'eau chaude suivant la revendication 13 ou 14, dans laquelle le diffuseur (12) est un manchon, qui est agencé pour être gonflé par une pression d'eau arrivante, alors qu'elle entre dans le récipient.

16. Installation d'eau chaude suivant l'une quelconque des revendications 13 à 15, dans laquelle le diffuseur est lesté de manière à reposer sur le fond du récipient.

17. Installation d'eau chaude suivant l'une quelconque des revendications 12 à 16, dans laquelle un capteur de température commandant la pompe est agencé dans le récipient d'accumulation à une hauteur où, en utilisation, il est souhaitable que l'interface stratifiée existe entre des couches chaude et froide, en fonction du niveau exigé.

18. Installation d'eau chaude suivant l'une quelconque des revendications 12 à 17, dans laquelle deux capteurs (TS1, TS2) ou plusieurs capteurs (TS1, TS2) de température sont agencés dans le récipient d'accumulation à diverses hauteurs, de manière à pouvoir faire varier la hauteur de l'interface stratifiée entre des couches chaude et froide, en fonction du niveau exigé.

19. Installation d'eau chaude suivant la revendication 18, ayant des moyens de mesure du courant d'eau chaude sortant du récipient et/ou de l'alimentation froide, afin de mesurer la demande d'eau chaude.

20. Installation d'eau chaude suivant l'une quelconque des revendications précédentes, comprenant un clapet anti-retour (100) dans le circuit de chauffage de l'eau, qui est agencé pour empêcher un retour de l'eau du sommet du récipient d'accumulation en passant par le circuit de chauffage de l'eau.

21. Installation d'eau chaude suivant la revendication 19, dans laquelle le clapet anti-retour (100) est placé dans la connexion pour l'alimentation froide en eau entrant dans le récipient d'accumulation et l'alimentation allant au circuit extérieur de chauffage.

22. Installation d'eau chaude suivant l'une quelconque des revendications précédentes, dans laquelle le circuit de distribution d'eau chaude est recombiné avec le circuit extérieur de chauffage, en amont de la seconde connexion ou de la connexion de distribution du récipient d'accumulation.

23. Installation d'eau chaude suivant l'une quelconque des revendications précédentes, dans laquelle le circuit de chauffage de l'eau comprend un capteur de température dans l'une des connexions ou dans les deux connexions du récipient d'accumulation, pour faire fonctionner la pompe ou une vanne, afin de régler la quantité d'eau chaude ou la stratification dans le récipient d'accumulation.

24. Installation d'eau chaude suivant la revendication 23, ayant une vanne (90) de modulation, qui atténue le débit dans le circuit de chauffage de l'eau et dans le récipient, pour régler la température de l'eau chaude distribuée.
